# EUROPÄISCHE PATENTSCHRIFT

(11) **EP 3 701 557 B1**
(45) Veröffentlichungstag und Bekanntmachung des Hinweises auf die Patenterteilung: **02.06.2021**
(21) Anmeldenummer: 18779259.3
(22) Anmeldetag: 17.09.2018
(51) Int. Cl.: H01H 39/00

(54) **ELEKTRISCHES SICHERUNGSELEMENT SOWIE VERFAHREN ZUM BETREIBEN EINES ELEKTRISCHEN SICHERUNGSELEMENTES**
ELECTRIC FUSE ELEMENT, AND METHOD FOR OPERATING AN ELECTRIC FUSE ELEMENT
ÉLÉMENT FUSIBLE ÉLECTRIQUE AINSI QUE PROCÉDÉ DE FONCTIONNEMENT D'UN ÉLÉMENT FUSIBLE ÉLECTRIQUE

(30) Priorität: 27.10.2017 DE 102017125208
(43) Veröffentlichungstag der Anmeldung: 02.09.2020
(73) Patentinhaber: Auto-Kabel Management GmbH, 79688 Hausen i.W. (DE)
(72) Erfinder: TAZARINE, Wacim, 41812 Erkelenz (DE); CACCIATORE, David, 47804 Krefeld (DE); RAFATI, Sohejl, 41236 Mönchengladbach (DE)
(74) Vertreter: Cohausz & Florack
(86) Internationale Anmeldenummer: PCT/EP2018/075032
(87) Internationale Veröffentlichungsnummer: WO 2019/081128

(56) Entgegenhaltungen:
- WO-A1-2017/042321
- DE-B3-102012 013 491
- US-A1- 2013 126 326

## Beschreibung

Der Gegenstand betrifft ein elektrisches Sicherungselement sowie Verfahren zum Betreiben eines elektrischen Sicherungselementes.

Durch die zunehmende Elektrifizierung von Kraftfahrzeugen, nicht nur hinsichtlich des Antriebsstrangs, sondern auch hinsichtlich der steigenden Anzahl an Komfortverbrauchern, steigen nicht nur die Batterieströme, sondern werden auch zunehmend höhere Spannungsniveaus erreicht. Gerade im Bereich der Antriebstechnologie werden sehr hohe Batteriespannungen benötigt. Dies führt zu stetig steigenden Anforderungen an die jeweiligen Absicherungselemente hinsichtlich ihrer maximalen Trennströme, deren Spannungsfestigkeit sowie deren Fehlerwahrscheinlichkeit.

Insbesondere in einem Fehlerfall, beispielsweise nach einem Crash, muss ein verlässliches Abschalten bzw. Trennen der Batterie vom restlichen Leitungsstrang in dem Fahrzeug sichergestellt sein. Durch die hohen Spannungen treten erhebliche Risiken für Insassen und Rettungspersonen auf, die verlässlich vermieden werden müssen. Um die Fehlerwahrscheinlichkeit zu verringern und die Sicherheit des elektrischen Systems eines Fahrzeugs zu erhöhen, werden neben aktiven Absicherungselementen auch passive Komponenten eingesetzt.

Aktive Absicherungselemente sind Trennschalter, die durch einen Antrieb getrieben eine Leitung durchtrennen. Der Antrieb wird beispielsweise pyrotechnisch angesteuert. Insbesondere kann ein Trennsignal eine Aktivierung eines Antriebs bedeuten, woraufhin das aktive Trennelement getrennt wird.

Passive Trennelemente sind beispielsweise Schmelzsicherungen, die basierend auf ihrem Wirkprinzip einen gewissen inneren Widerstand aufweisen müssen. Werden solche Schmelzsicherung in Reihe mit dem Lastpfad geschaltet, erzeugen diese eine relativ hohe Verlustleistung. Da naturgemäß ein gewisser elektrischer Widerstand in den Schmelzsicherungen vorhanden sein muss, ist eine Verlustleistung bei Verwendung einer Schmelzsicherung im Laststrang unvermeidlich.

Auf der anderen Seite sind jedoch aktive Trennelemente aufgrund ihrer sehr schnellen mechanischen Trennung des Lastpfads anfällig gegenüber Lichtbögen. Brennt ein Lichtbogen über die Trennstelle, so kann nach wie vor ein hoher Strom fließen und eine sichere Trennung des Bordnetzes von der Batterie ist nicht gewährleistet. WO-A-2017/042321 offenbart ein Sicherungselement nach dem Oberbegriff des Anspruchs 1.

Aus diesem Grunde lag dem Gegenstand die Aufgabe zugrunde, ein Sicherungselement zur Verfügung zu stellen, welches bei geringem Übergangswiderstand im Lastpfad eine sehr geringe Fehlerwahrscheinlichkeit aufweist.

Diese Aufgabe wird durch ein Sicherungselement nach Anspruch 1, ein Fahrzeug nach Anspruch 12 sowie ein Verfahren nach Anspruch 14 gelöst.

Zwischen der Batterie und den Verbrauchern, sei es Komfortverbraucher und/oder der Antriebsmotor, kann ein schaltbarer Lastpfad vorgesehen sein. Ein Lastpfad kann eine elektrische Leitung sein, entlang derer elektrischer Strom durch das Sicherungselement fließt.

Zusätzlich zu dem Lastpfad kann ein schaltbarer Sicherungspfad vorgesehen sein. Ein Sicherungspfad kann eine elektrische Leitung sein, entlang derer elektrischer Strom durch das Sicherungselement fließt. Dadurch, dass der Sicherungspfad schaltbar ist, kann er im Normalbetrieb stromlos geschaltet sein. Insbesondere kann der Sicherungspfad im Normalbetrieb geöffnet sein.

Eingangsseitig lassen sich Lastpfad und Sicherungspfad miteinander kurschließen, so dass das Sicherungselement insbesondere einen eingangsseitigen Anschluss aufweist. Von diesem Anschluss können Lastpfad und Sicherungspfad abzweigen. Auch können Sicherungspfad und Lastpfad eingangsseitig jeweils einen eigenen Anschluss aufweisen. Jedoch sind Sicherungspfad und Lastpfad dann bevorzugt in dem Sicherungselement miteinander kurz geschlossen.

Ausgangsseitig können Lastpfad und Sicherungspfad voneinander getrennte Anschlüsse aufweisen.

Der oder die eingangsseitigen Anschlüsse (der Eingang) des Sicherungselementes werden vorzugsweise mit einem Batteriepol, insbesondere dem B+ Pol oder dem B-Pol der Batterie verbunden.

Der ausgangsseitige Anschluss des Lastpfads wird mit zumindest einer Last, insbesondere dem Antriebsstrang verbunden. Der ausgangsseitige Anschluss des Sicherungspfads wird mit einem jeweils zum eingangsseitigen Anschluss gegenpoligen Batteriepol verbunden.

Da der Sicherungspfad im Normalbetrieb geöffnet ist, also stromlos ist, besteht zwischen dem Eingang und dem Ausgang des Sicherungspfads keine elektrische Verbindung und insbesondere ist in diesem Fall auch kein Kurzschluss der Batterie über den Sicherungspfad gegeben.

Es ist nun erkannt worden, dass eine sichere Trennung, insbesondere unter Vermeidung eines Lichtbogens entlang der Trennstelle des Lastpfads dadurch gewährleistet werden kann, dass der Lastpfad und der Sicherungspfad derart miteinander in Wirkverbindung sind, dass ein elektrisches Öffnen des Lastpfads ein elektrisches Schließen des Sicherungspfads bewirkt und dass eine in dem Sicherungspfad angeordnete Sicherung im Moment des Schließens des Sicherungspfads auslöst.

Gegenständlich wird eine Kombination einer aktiven und passiven Komponente ermöglicht. In dem Lastpfad kann eine aktive Komponente verbaut sein, die den Lastpfad aktiv öffnet. Gleichzeitig kann der Sicherungspfad geschlossen werden, was zu einem Auslösen der passiven Komponente in dem Sicherungspfad führt.

Über den Sicherungspfad wird in dem Moment des Öffnens des Lastpfads ein hoher Strom geleitet. Insbesondere kommutiert der Strom des Lastpfads auf den Sicherungspfad. Dabei kann ein gegebenenfalls kurzzeitig über die Trennstelle des Lastpfads entlang eines Lichtbogens fließender Strom auf den Sicherungspfad kommutieren.

Der Lastpfad ist im Normalbetrieb ein Kurzschluss zwischen dem Eingang und dem Ausgang des Sicherungselements. Der Widerstand über den Lastpfad ist nahezu null, so dass eine Verlustleistung im Normalbetrieb minimiert ist.

Die Sicherung entlang des Sicherungspfads ist mit einem erhöhten elektrischen Widerstand versehen, dieser Widerstand hat jedoch im Normalbetrieb keine Auswirkungen, da der Sicherungspfad im Normalbetrieb geöffnet ist. Es fließt im Normalbetrieb kein Strom über den Sicherungspfad.

Erst im Fehlerfall, d.h. bei einem Kurzschluss, einem Crash und/oder dem Defekt einer Batterie oder einem anderen Fehlerfall, wird der Lastpfad aktiv geöffnet und durch die Wirkverbindung zwischen Lastpfad und Sicherungspfad erfolgt ein Schließen des Sicherungspfads. Dieses Schließen des Sicherungspfads führt zu einer Aktivierung der Sicherung in dem Sicherungspfad durch den auf den Sicherungspfad kommutierenden Strom.

Nachdem der Strom auf dem Sicherungspfad kommutiert ist, was zu einem sicheren Trennen des Lastpfads führt, wird auch der Strom in dem Sicherungspfad unmittelbar durch die darin angeordnete Sicherung getrennt. Das Sicherungselement stellt somit sicher, dass die Last, welche am Ausgang des Lastpfads angeschlossen ist, verlässlich von der Batterie getrennt wird.

Wie bereits angedeutet, verfügt der Lastpfad gemäß einem Ausführungsbeispiel über eine Trennstelle. Die Trennstelle ist insbesondere eine Verjüngung, Sollbruchstelle oder dergleichen. Gemäß einem Ausführungsbeispiel ist die Trennstelle auch durch eine materialschlüssige Verbindung zwischen zwei miteinander verbundene Trennlaschen gebildet. Die Verbindung kann eine Löt- oder Schweißverbindung sein. Die Laschen, die die Trennstelle bilden, können einander zugewiesen sein.

Gemäß einem Ausführungsbeispiel wird vorgeschlagen, dass ein aktiviertes Trennelement die Trennstelle trennt und gleichzeitig den Sicherungspfad schließt. Das Trennelement führt dazu, dass eine mechanische Wirkverbindung zwischen der Trennstelle und dem Sicherungspfad gebildet ist. Das Trennelement kann beispielsweise aus zumindest zwei Materialien gebildet sein. Dabei ist es möglich, dass ein erster Bereich des Trennelements durch ein Isolator gebildet ist und ein zweiter Bereich des Trennelements durch einen Leiter. Zunächst ist das Trennelement mit dem Isolator in dem Sicherungspfad angeordnet und führt dazu, dass der Sicherungspfad geöffnet ist. Wird das Trennelement bewegt, so kann der Isolator in Richtung der Trennstelle bewegt werden und gleichzeitig der Leiter des Trennelements den Sicherungspfad kurzschließen.

Auch wird vorgeschlagen, dass das Trennelement einen mechanischen Antrieb aufweist. Dies ist insbesondere ein pyrotechnischer Antrieb. Ein pyrotechnischer Antrieb kann durch eine pyrotechnische Zündpille gebildet sein, die elektrisch aktivierbar ist. Beim Aktivieren der Zündpille wird ein Explosionsdruck aufgebaut, der das Trennelement beschleunigt. Dabei kann das Trennelement gleichzeitig sowohl ein Trennen der Trennstelle des Lastpfads als auch ein Schließen des Sicherungspfads bewirken. Insbesondere durch eine lineare Bewegung kann dies erfolgen.

Gemäß einem Ausführungsbeispiel wird vorgeschlagen, dass das Trennelement einen Trennschieber aufweist. Der Trennschieber wird insbesondere durch den Antrieb in Richtung der Trennstelle des Lastpfads beschleunigt. Gleichzeitig wird diese Bewegung des Trennschiebers dazu führen, dass der Sicherungspfad geschlossen wird. Der Trennschieber kann ein ein- oder zweiteiliges Bauteil sein. Der Trennschieber wird insbesondere einheitlich beschleunigt, d.h. dass alle Bauelemente des Trennschiebers eine gleiche Beschleunigung durch den Antrieb erfahren.

Gemäß einem Ausführungsbeispiel wird vorgeschlagen, dass der Trennschieber als in einem Gehäuse verschiebbarer Kolben gebildet ist. Das Gehäuse kann insbesondere den Antrieb, den Trennschieber und die Trennstelle aufweisen. Insbesondere kann das Gehäuse durch die Trennstelle bzw. die die Trennstelle bildenden Laschen verschlossen sein. In dem Gehäuse kann der Trennschieber linear bewegt werden. Der Kolben wird dabei in dem Gehäuse in Richtung der Trennstelle bewegt.

Ist in dem Gehäuse zwischen dem Trennschieber und der Trennstelle ein fließfähiges Medium angeordnet, so wird dieses fließfähige Medium durch die Bewegung des Kolbens in Richtung der Trennstelle beschleunigt. Das fließfähige Medium ist bevorzugt inkompressibel, so dass die Beschleunigung des Kolbens in Richtung der Trennstelle dazu führt, dass an der Trennstelle ein Berstdruck überschritten wird und die Trennstelle aufbricht. Dies führt zu einem Trennen des Lastpfads an der Trennstelle. Das fließfähige Medium kann einen gegebenenfalls entstehenden Lichtbogen löschen. Auch kann das fließfähige Medium dazu geeignet sein, die Entstehung des Lichtbogens grundsätzlich zu unterbinden.

Gemäß einem Ausführungsbeispiel wird vorgeschlagen, dass der Trennschieber ein Verbindungselement aufweist. Dieses Verbindungselement kann dazu geeignet sein, den Sicherungspfad zu schließen. Das Verbindungselement kann durch den Antrieb mechanisch zwischen zwei Anschlüssen des Sicherungspfads bewegt werden. Im Normalbetrieb ist der Sicherungspfad zwischen den zwei Anschlüssen geöffnet. Dabei kann insbesondere der Isolator des Trennschiebers zwischen den Anschlüssen angeordnet sein. Im Aktivierungsfall wird der Trennschieber linear bewegt. Dies kann dazu führen, dass der Isolator zwischen den Anschlüssen weg bewegt wird und das Verbindungselement zwischen die Anschlüsse bewegt wird. Das führt dazu, dass das Verbindungselement den Sicherungspfad schließt.

Gemäß einem Ausführungsbeispiel wird vorgeschlagen, dass das Trennelement ein fließfähiges Medium aufweist. Wie bereits erläutert, kann das fließfähige Medium, welches insbesondere inkompressibel ist, durch einen Antrieb in Richtung der Trennstelle beschleunigt werden. Dadurch entsteht an der Trennstelle ein Druck, der zum Trennen der Trennstelle führt.

Gemäß einem Ausführungsbeispiel wird vorgeschlagen, dass nach Aktivierung des Antriebs die Anschlüsse des Sicherungspfads durch das Verbindungselement kurzgeschlossen sind. Dann kann der Strom, der zunächst über den Lastpfad fließt, auf den Sicherungspfad kommutieren.

Gemäß einem Ausführungsbeispiel wird vorgeschlagen, dass die Sicherung in dem Sicherungspfad eine Schmelzsicherung ist. Wird über den Sicherungspfad ein ausreichend hoher Strom geführt, schmilzt die Schmelzsicherung und trennt den Sicherungspfad.

Dadurch, dass der Strom auf den Sicherungspfad kommutiert, wird zunächst der Lastpfad sicher getrennt. Anschließend wird der Sicherungspfad sicher durch die Schmelzsicherung geöffnet. Danach ist die Batterie vollständig von dem Bordnetz getrennt.

Der Sicherungspfad kann als Kurzschluss zwischen zwei Polen einer Batterie geschaltet sein. Im Normalbetrieb ist der Sicherungspfad geöffnet und die Batterie somit nicht kurzgeschlossen. Im Aktivierungsfall führt der Kurzschluss jedoch dazu, dass der Widerstand zwischen dem Batteriepol, der mit dem Eingang des Sicherungselements verbunden ist und dem Batteriepol, der mit dem Ausgang des Sicherungspfads verbunden ist, erheblich geringer ist, als der Widerstand zwischen dem Pol an dem Eingang des Sicherungselements und dem über den Lastpfad und die Last angeschlossenen Batteriepol. Dies führt zu einem sicheren Kommutieren des Stroms von dem Lastpfad, der getrennt wird, auf den Sicherungspfad und einem anschließenden Trennen der Sicherung in dem Sicherungspfad.

Gemäß einem Ausführungsbeispiel wird vorgeschlagen, dass der Lastpfad zwischen einem Pol einer Batterie und zumindest einer mit dem anderen Pol der Batterie verbundenen Last geschaltet ist. Im Normalbetrieb wird die Last somit über den Lastpfad bei sehr geringen Leitungsverlusten versorgt. Das Sicherungselement im Sicherungspfad ist inaktiv und stromlos. Erst im Aktivierungsfall wird das Sicherungselement im Sicherungspfad bestromt. Dadurch öffnet der Sicherungspfad, so dass ein sicheres Trennen durch das Sicherungselement gewährleistet ist.

Gemäß einem Ausführungsbeispiel wird vorgeschlagen, dass das fließfähige Medium eine Flüssigkeit oder ein rieselfähiges Schüttgut, insbesondere Sand ist und/oder dass das fließfähige Medium flüssig, pastös, schaumförmig, gelförmig oder gekörnt ist. Insbesondere ist das fließfähige Medium inkompressibel.

Um ein Lichtbogen an der Trennstelle des Lastpfads zu unterbinden oder zu löschen, ist das fließfähige Medium gemäß einem Ausführungsbeispiel mit elektrisch isolierenden Eigenschaften ausgestattet. Auch kann das fließfähige Medium mit Lichtbogen löschenden Eigenschaften ausgestattet sein.

Ein weiterer Aspekt ist ein Fahrzeug nach Anspruch 12.

In dem Fahrzeug ist eine elektrische Energiequelle vorgesehen. Ein erster Pol der als Fahrzeugbatterie gebildeten Energiequelle wird mit dem Eingangsanschluss des Sicherungselements verbunden. Der andere Pol wird einerseits mit dem Ausgangsanschluss des Sicherungspfads verbunden und andererseits mit der Last, welche an dem ausgangsseitigen Anschluss des Lastpfads angeschlossen ist. Somit ist ein erster Stromkreis über den ersten Pol, den Lastpfad, die Last und den zweiten Pol gebildet. Ein zweiter, geöffneter Stromkreis ist über den ersten Pol, den Sicherungspfad und den zweiten Pol gebildet. Dieser zweite Stromkreis ist im Normalfall geöffnet und wird, wie oben beschrieben, im Aktivierungsfall geschlossen und bildet somit einen Kurzschluss über die beiden Batteriepole. Dies sichert das Kommutieren des Stroms von der Trennstelle auf den Sicherungspfad.

Gemäß einem weiteren Aspekt wird ein Verfahren zum Trennen eines Lastpfads mit Hilfe eines elektrischen Sicherungselements vorgeschlagen. Im Fehlerbetrieb wird der Lastpfad geöffnet und gleichzeitig der Sicherungspfad geschlossen. Dies führt dazu, dass der über den Lastpfad fließende Strom auf den Sicherungspfad kommutiert und dadurch eine in dem Sicherungspfad angeordnete Sicherung auslöst und den Sicherungspfad öffnet.

Nachfolgend wird der Gegenstand anhand einer Ausführungsbeispiele zeigenden Zeichnung näher erläutert. In der Zeichnung zeigen:
- Fig. 1: ein Ersatzschaltbild eines Bordnetzes mit einem gegenständlichen Sicherungselement;
- Fig. 2a: ein gegenständliches Sicherungselement im Normalzustand;
- Fig. 2b: ein Sicherungselement während der Aktivierung;
- Fig. 2c: ein Sicherungselement im Auslösezustand.

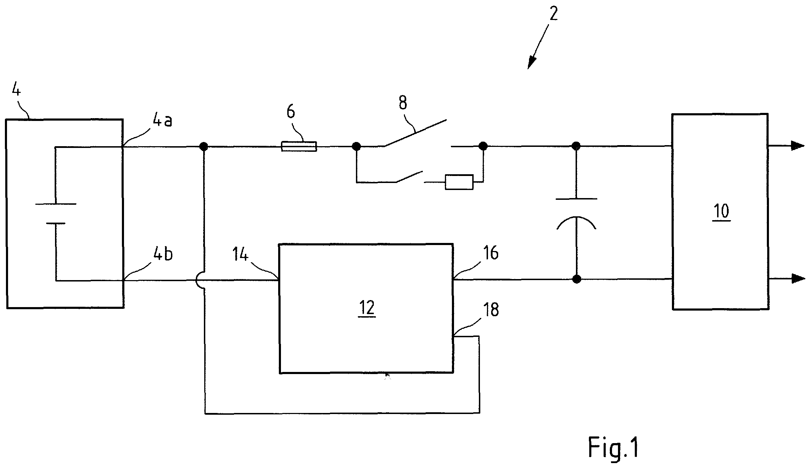

Fig. 1 zeigt ein Ersatzschaltbild eines Bordnetzes 2 eines Kraftfahrzeugs. Beispielhaft ist eine Hochvoltbatterie 4 dargestellt. Die Hochvoltbatterie 4 kann insbesondere eine Batterie eines Antriebsstrangs eines Fahrzeugs sein. Der B+ Pol 4a der Batterie 4 ist über einen Vorwiderstand 6 sowie einen "Zündschalter" 8 mit einem Antriebsstrang 10 als Last verbunden. Im Betrieb ist der Schalter 8 geschlossen.

Der B- Pol 4b ist über das gegenständliche Sicherungselement 12 mit der Last 10 verbunden. Das Sicherungselement 12 hat einen Eingangsanschluss 14 sowie einen ersten Ausgangsanschluss 16 und einen zweiten Ausgangsanschluss 18. Der Lastpfad ist über den Eingangsanschluss 14 und den Ausgangsanschluss 16 gebildet. Der Sicherungspfad ist über den Eingangsanschluss 14 und den Ausgangsanschluss 18 gebildet. Der Ausgangsanschluss 16 ist mit der Last 10 verbunden und der Ausgangsanschluss 18 ist mit dem B+ Pol 4a verbunden.

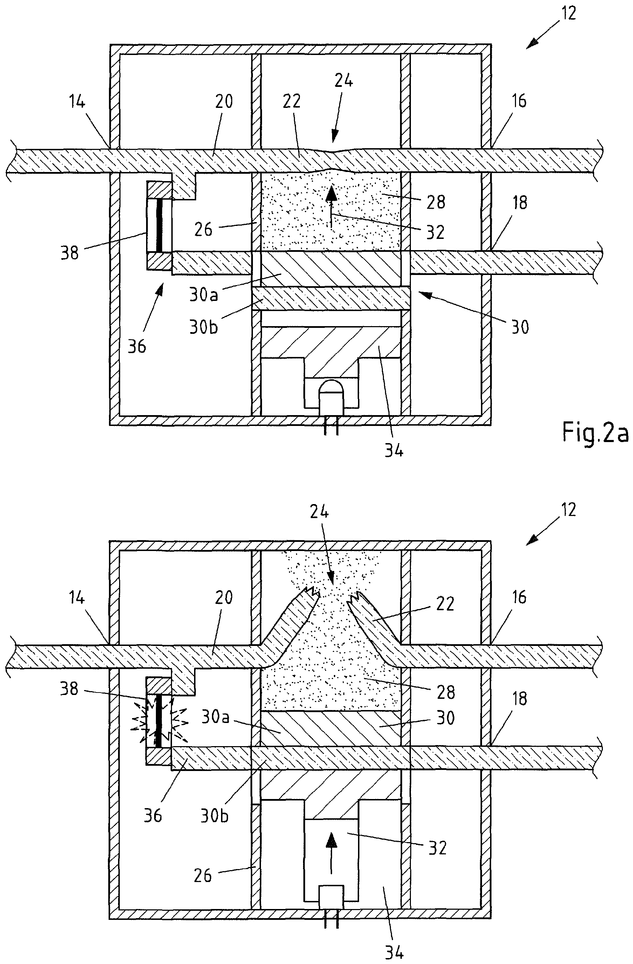

Das Sicherungselement 12 ist in der Fig. 2a im Detail dargestellt. Der Lastpfad 20 verbindet den Eingangsanschluss 14 mit dem Ausgangsanschluss 16. Der Lastpfad 20 weist ein Trennelement 22 auf, an dem eine Sollbruchstelle 24 angeordnet ist. Das Trennelement 22 verschließt ein Gehäuse 26. In dem Gehäuse 26 ist ein fließfähiges Medium 28 angeordnet.

Das Gehäuse 26 ist in der Art eines Kanals gebildet, in dem ein Trennschieber 30 angeordnet ist. Der Trennschieber 30 lässt sich in Richtung 32 bewegen. Der Trennschieber 30 ist zweiteilig aus einem Isolator 30a und einem leitenden Element 30b gebildet.

In dem Kanal, vor dem Trennschieber 30 ist ein Antrieb 34 angeordnet, der als pyrotechnischer Antrieb gebildet ist.

Bei einer Aktivierung des Antriebs 34 wird der Trennschieber 30 in Richtung 32 beschleunigt. Dies führt dazu, dass das fließfähige Medium 28 einen Druck auf die Sollbruchstelle 24 derart ausübt, dass diese birst. Dies wird nachfolgend noch beschrieben.

Der Sicherungspfad 36 ist zwischen dem Eingangsanschluss 14 und dem Ausgangsanschluss 18 gebildet. Der Trennschieber 30 bildet eine elektrische Trennung entlang des Sicherungspfads 36 durch den Isolator 30a. In dem Sicherungspfad 36 ist eine Schmelzsicherung 38 angeordnet.

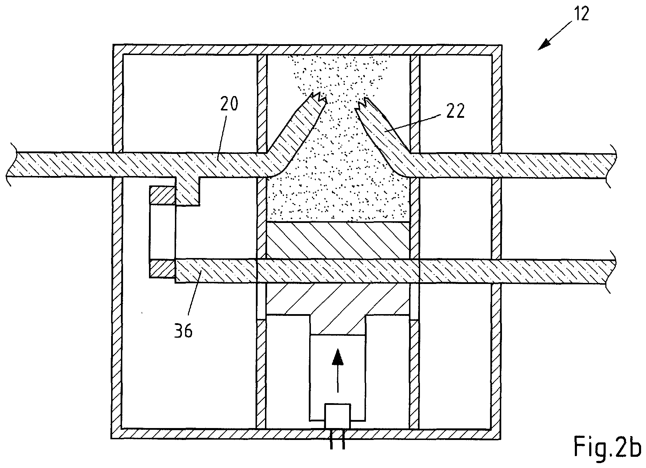

Fig. 2b zeigt das Sicherungselement 12 im Moment der Aktivierung. Der Antrieb 34 wurde durch ein externes Signal, beispielsweise ein Airbagsteuersignal oder dergleichen aktiviert. Dies führt dazu, dass eine Kraft auf den Trennschieber 30 wirkt, so dass dieser in Richtung 32 beschleunigt wird. Dies führt dazu, dass das Medium 28 einen derartigen Druck auf das Trennelement 22 ausübt, dass die Sollbruchstelle 24 birst.

Gleichzeitig führt die Bewegung des Trennschiebers 30 in dem Gehäuse 26 dazu, dass der Leiter 30b den Sicherungspfad 36 schließt. Dieses Schließen des Sicherungspfads 36 führt zu einem Kurzschluss zwischen dem Eingangsanschluss 14 und dem Ausgangsanschluss 18 und mithin, wie aus der Fig. 1 zu entnehmen ist, zwischen dem B+ Pol 4a und dem B- Pol 4b der Batterie 4.

Dieser Kurzschluss führt zu einer Kommutierung eines gegebenenfalls noch über das Trennelement 22 fließenden Stroms, beispielsweise über einen Lichtbogen, auf den Sicherungspfad 36. In dem Sicherungspfad 36 wird über den kommutierten Strom die Schmelzsicherung 38 aktiviert. Die Schmelzsicherung 38 schmilzt auf und trennt den Sicherungspfad 36 ebenfalls auf.

Dies führt zu der Situation in Fig. 2c, in der zu erkennen ist, dass sowohl der Lastpfad 20 als auch der Sicherungspfad 36 stromlos ist. Die Last 10 ist somit vollständig von der Batterie 4 getrennt.

### Bezugszeichenliste

- 2: Bordnetz
- 4: Hochvoltbatterie
- 4a: B+ Pol
- 4b: B- Pol
- 6: Widerstand
- 8: Schalter
- 10: Last
- 12: Sicherungselement
- 14: Eingangsanschluss
- 16, 18: Ausgangsanschluss
- 20: Lastpfad
- 22: Trennelement
- 24: Sollbruchstelle
- 26: Gehäuse
- 28: Medium
- 30: Trennschieber
- 30a: Isolator
- 30b: Leiter
- 32: Richtung
- 34: Antrieb
- 36: Sicherungspfad
- 38: Schmelzsicherung

## Patentansprüche

1. Elektrisches Sicherungselement (12) umfassend,
- einen schaltbaren Lastpfad (20) und
- einen schaltbaren Sicherungspfad (36), wobei
- der Lastpfad (20) und der Sicherungspfad (36) mit ihren jeweiligen Eingängen miteinander kurzgeschlossen sind,
**dadurch gekennzeichnet,**
- **dass** der Lastpfad (20) und der Sicherungspfad (36) derart miteinander in Wirkverbindung sind, dass ein elektrisches Öffnen des Lastpfads (20) ein elektrisches Schließen des Sicherungspfads (36) bewirkt und dass eine in dem Sicherungspfad (36) angeordnete Sicherung (38) im Moment des Schließens des Sicherungspfads (36) auslöst.

2. Sicherungselement nach Anspruch 1,
**dadurch gekennzeichnet,**
- **dass** in dem Lastpfad (20) eine Sollbruchstelle (24) angeordnet ist.

3. Sicherungselement nach Anspruch 1 oder 2,
**dadurch gekennzeichnet,**
- **dass** ein aktiviertes Trennelement (22) die Sollbruchstelle (24) trennt und gleichzeitig den Sicherungspfad (36) schließt.

4. Sicherungselement nach Anspruch 3, **dadurch gekennzeichnet,**
- **dass** das Trennelement (22) einen Antrieb (34), insbesondere einen pyrotechnischen Antrieb aufweist.

5. Sicherungselement nach Anspruch 4, **dadurch gekennzeichnet,**
- **dass** das Trennelement (22) einen Trennschieber (30) aufweist, welcher durch den Antrieb (34) in Richtung der Sollbruchstelle (24) des Lastpfads (20) beschleunigt wird, wobei die Bewegung des Trennschiebers (30) ein Schließen des Sicherungspfads (36) bewirkt.

6. Sicherungselement nach Anspruch 5, **dadurch gekennzeichnet,**
- **dass** der Trennschieber (30) als in einem Gehäuse (26) verschiebbarer Kolben gebildet ist, wobei der Kolben ein zumindest zwischen der Sollbruchstelle (24) und dem Trennschieber (30) angeordnetes fließfähiges Medium (28) in Richtung der Sollbruchstelle (24) beschleunigt. und
- **dass** der Trennschieber (30) einen Leiter (30b) aufweist, wobei der Leiter (30b) durch den Antrieb (34) zwischen zwei Anschlüsse (14, 18) des Sicherungspfads (36) beweglich ist.

7. Sicherungselement nach Anspruch 3, **dadurch gekennzeichnet,**
- **dass** das Trennelement (22) ein fließfähiges Medium (28) aufweist, wobei das fließfähige Medium (28) durch einen Antrieb (34) in Richtung der Sollbruchstelle (24) beschleunigt wird und ein dadurch auf die Sollbruchstelle (24) wirkender Druck die Sollbruchstelle (24) trennt.

8. Sicherungselement nach Anspruch 6, **dadurch gekennzeichnet,**
- **dass** der Leiter (30b) nach Aktivierung des Antriebs (34) die Anschlüsse (14, 18) des Sicherungspfads (36) kurzschließt.

9. Sicherungselement nach einem der vorangehenden Ansprüche,
**dadurch gekennzeichnet,**
- **dass** der Sicherungspfad (36) als Kurzschluss zwischen zwei Polen einer Batterie geschaltet ist.

10. Sicherungselement nach einem der vorangehenden Ansprüche,
**dadurch gekennzeichnet,**
- **dass** der Lastpfad (20) zwischen einem Pol einer Batterie und zumindest einer mit dem anderen Pol der Batterie verbundenen Last geschaltet ist.

11. Sicherungselement nach einem der Ansprüche 6 oder 8, **dadurch gekennzeichnet, dass** das fließfähige Medium (28) eine Flüssigkeit oder ein rieselfähiges Schüttgut, insbesondere Sand, ist und/oder dass das fließfähige Medium (28) flüssig, pastös, schaumförmig, gelförmig oder gekörnt ist insbesondere
- dass das fließfähige Medium (28) elektrisch isolierende Eigenschaften aufweist und/oder einen Lichtbogen löschende Eigenschaften aufweist.

12. Fahrzeug, umfassend:
- ein Bordnetz (2), und
- ein elektrisches Sicherungselement nach einem der Ansprüche 1 bis 11.

13. Fahrzeug nach Anspruch 12,
**dadurch gekennzeichnet,**
**dass** eine Fahrzeugbatterie (4) als elektrische Energiequelle vorgesehen ist und dass die Fahrzeugbatterie (4) mit einem Pol (4a) an den Eingangsanschluss des Sicherungselements und mit dem anderen Pol (4b) an den Ausgangsanschluss des Sicherungspfads angeschlossen ist.

14. Verfahren zum Trennen eines Lastpfads mit Hilfe eines elektrischen Sicherungselements nach einem der Ansprüche 1 bis 11, vorzugsweise in einem Fahrzeug nach Anspruch 12 oder 13,
**dadurch gekennzeichnet,**
**dass** im Fehlerbetrieb der Lastpfad (20) geöffnet und gleichzeitig der Sicherungspfad (36) geschlossen wird, derart, dass der über den Lastpfad (20) fließende Strom auf den Sicherungspfad (36) kommutiert und dadurch eine in dem Sicherungspfad (36) angeordnete Sicherung (38) auslöst und den Sicherungspfad (36) öffnet.

## Claims

1. Electrical fuse element (12) comprising,
- a switchable load path (20) and
- a switchable fuse path (36), wherein
- the load path (20) and the fuse path (36) with their respective inputs are shortcircuited with each other,
**characterized in that,**
- the load path (20) and the fuse path (36) are in operative connection with one another in such a way that an electrical opening of the load path (20) causes an electrical closing of the fuse path (36) and
- a fuse (38) arranged in the fuse path (36) triggers at the moment of closing of the fuse path (36).

2. Fuse element according to claim 1,
**characterized in that,**
- a separation point (24) is arranged in the load path (20).

3. Fuse element according to claim 1 or 2,
**characterized in that,**
- an activated disconnecting element (22) separates the separation point (24) and simultaneously closes the fuse path (36).

4. Fuse element according to claim 3,
**characterized in that,**
- the disconnecting element (22) has a drive (34), in particular a pyrotechnical drive.

5. Fuse element according preceding claim 4,
**characterized in that,**
- the disconnecting element (22) has a disconnection slide (30) which is accelerated by a drive (34) in the direction of the separation point (24) of the load path (20), the movement of the disconnection slide (30) causing the fuse path (36) to close.

6. Fuse element according to claim 5,
**characterized in that,**
- the disconnection slide (30) is formed as a piston displaceable in a housing (26), the piston accelerating a flowable medium arranged at least between the separation point (24) and the disconnection slide (30) in the direction of the separation point (24) and
- the disconnection slide (30) has a conductor (30b), the conductor (30b) being movable in-between two taps (14, 18) of the fuse path (36) by the drive (34).

7. Fuse element according to claim 3,
**characterized in that,**
- the disconnecting element (22) comprises a flowable medium (28), the flowable medium (28) being accelerated by a drive (34) in the direction of the separation point (24) and a pressure acting thereby on the separation point (24) separating the separation point (24).

8. Fuse element according to claim 6,
**characterized in that,**
- the conductor (30b) short-circuits the connections (14, 18) of the fuse path (36) after activation of the drive (34).

9. Fuse element according to one of the preceding claims,
**characterized in that,**
- the fuse path (36) is connected as a short circuit between two poles of a battery.

10. Fuse element according to one of the preceding claims,
**characterized in that,**
- the load path (20) is connected between one pole of a battery and at least one load connected to the other pole of the battery.

11. Fuse element according to any one of claims 6 or 8,
**characterized in that,**
- the flowable medium (28) is a liquid or a free-flowing bulk material, in particular sand, and/or the flowable medium (28) is liquid, pasty, foamy, gel-like or granular, in particular
- that the flowable medium (28) has electrically insulating properties and/or has arc-quenching properties.

12. Vehicle, comprising:
- an on-board electrical system (2), and
- an electrical fuse element according to any one of claims 1 to 11.

13. Vehicle according to claim 12,
**characterized in that,**
- a vehicle battery (4) is provided as the electrical energy source and **in that** the vehicle battery (4) is connected with one pole (4a) to the input terminal of the fuse element and with the other pole (4b) to the output terminal of the fuse path.

14. Method for disconnecting a load path with the aid of an electrical fuse element according to one of claims 1 to 11, preferably in a vehicle according to claim 12 or 13,
**characterized in that,**
- in fault operation the load path (20) is opened and at the same time the fuse path (36) is closed in such a way that the current flowing via the load path (20) commutates to the fuse path(36) and thereby trips a fuse (38) arranged in the fuse path (36) and opens the fuse path (36).

## Revendications

1. Elément fusible électrique (12) comprenant,
- un chemin de charge commutable (20) et
- un chemin de fusible commutable (36),
- où le chemin de charge (20) et le chemin de fusible (36) sont court-circuités l'un par rapport à l'autre avec leurs entrées respectives,
**caractérisé**
- **en ce que** le chemin de charge (20) et le chemin de fusible (36) sont reliés fonctionnellement l'un à l'autre de telle manière à ce qu'une ouverture électrique du chemin de charge (20) provoque une fermeture électrique du chemin de fusible (36), et
- **en ce qu'**un fusible (38) disposé dans le chemin de fusible (36) se déclenche au moment de la fermeture du chemin de fusible (36).

2. Elément fusible selon la revendication 1,
**caractérisé**
**en ce qu'**un point de rupture prédéterminée (24) est disposé dans le chemin de charge (20).

3. Elément fusible selon la revendication 1 ou 2,
**caractérisé**
**en ce qu'**un élément de séparation activé (22) sépare le point de rupture prédéterminée (24) et ferme simultanément la voie de fusible (36).

4. Elément fusible selon la revendication 3,
**caractérisé**
**en ce que** l'élément de séparation (22) présente un entraînement (34), en particulier un entraînement pyrotechnique.

5. Elément fusible selon la revendication 4,
**caractérisé**
**en ce que** l'élément de séparation (22) présente un coulisseau de séparation (30) qui est accéléré par l'entraînement (34) en direction du point de rupture prédéterminée (24) du chemin de charge (20), le mouvement du coulisseau de séparation (30) provoquant la fermeture du chemin de fusible (36).

6. Elément fusible selon la revendication 5,
**caractérisé**
- **en ce que** le coulisseau de séparation (30) est formé comme un piston déplaçable dans un boîtier (26),
- où le piston accélère un médium fluide (28) disposé au moins entre le point de rupture prédéterminée (24) et le coulisseau de séparation (30) en direction du point de rupture prédéterminée (24), et
- **en ce que** le coulisseau de séparation (30) présente un conducteur (30b), le conducteur (30b) pouvant être déplacé par l'entraînement (34) entre deux connexions (14, 18) du chemin de fusible (36).

7. Elément fusible selon la revendication 3
**caractérisé**
**en ce que** l'élément de séparation (22) comprend un médium fluide (28), où le médium fluide (28) est accéléré par un entraînement (34) dans la direction du point de rupture prédéterminée (24) et une pression agissant ainsi sur le point de rupture prédéterminée (24) dissocie le point de rupture prédéterminée (24).

8. Elément fusible selon la revendication 6,
**caractérisé**
**en ce que** le conducteur (30b) court-circuite les bornes (14, 18) du chemin de fusible (36) après activation de l'entraînement (34).

9. Elément fusible selon l'une quelconque des revendications précédentes,
**caractérisé**
**en ce que** le chemin de fusible (36) est connecté en court-circuit entre deux pôles d'une batterie.

10. Elément fusible selon l'une des revendications précédentes,
**caractérisé**
**en ce que** le chemin de charge (20) est connecté entre une borne d'une batterie et au moins une charge connectée à l'autre borne de la batterie.

11. Élément fusible selon l'une des revendications 6 ou 8,
**caractérisé**
**en ce que** le médium fluide (28) est un liquide ou un matériau en vrac à écoulement libre, en particulier du sable, et/ou **en ce que** le médium fluide (28) est liquide, pâteux, mousseux, gélifié ou granulaire, en particulier **en ce que** le médium fluide (28) a des propriétés d'isolation électrique et/ou des propriétés d'extinction d'arc lumineux.

12. Véhicule, comprenant :
- un réseau embarqué (2) et
- un élément fusible électrique selon l'une quelconque des revendications 1 à 11.

13. Véhicule selon la revendication 12,
**caractérisé**
- **en ce qu'**une batterie de véhicule (4) est prévue comme source d'énergie électrique et
- **en ce que** la batterie de véhicule (4) est reliée par un pôle (4a) à la borne d'entrée de l'élément fusible et par l'autre pôle (4b) à la borne de sortie du chemin de fusible.

14. Procédé de déconnexion d'un chemin de charge au moyen d'un élément fusible électrique selon l'une quelconque des revendications 1 à 11, de préférence dans un véhicule selon la revendication 12 ou 13,
**caractérisé**
**en ce qu'**en mode de défaut, le chemin de charge (20) est ouvert et en même temps le chemin de fusible (36) est fermé, de sorte que le courant circulant via le chemin de charge (20) commute vers le chemin de fusible (36) et déclenche ainsi un fusible (38) disposé dans le chemin de fusible (36) et ouvre le chemin de fusible (36).
